# EUROPÄISCHE PATENTSCHRIFT

(11) **EP 1 645 921 B1**
(45) Veröffentlichungstag und Bekanntmachung des Hinweises auf die Patenterteilung: **31.01.2007**
(21) Anmeldenummer: 04023685.3
(22) Anmeldetag: 05.10.2004
(51) Int. Cl.: G05B 19/042, G06F 3/00

(54) **Überwachung der Bewegung einer menschlichen Hand oder eines manuell geführten Bauteils**
Monitoring of the motion of a human hand or a manually handled part
Surveillance du mouvement d'un main humain ou d'un composant manipulée manuellement

(43) Veröffentlichungstag der Anmeldung: 12.04.2006
(73) Patentinhaber: Fehlings, Jürgen, 65396 Walluf (DE); Fehlings, Margot, 65396 Walluf (DE)
(72) Erfinder: Fehlings, Jürgen, 65396 Walluf (DE)
(74) Vertreter: Quermann, Helmut

(56) Entgegenhaltungen:
- DE-A- 10 308 403
- US-A- 6 094 188
- US-B1- 6 198 485

## Beschreibung

Die Erfindung bezieht sich auf ein System zum Überwachen der Bewegung einer menschlichen Hand oder eines manuell geführten Bauteils, insbesondere eines Werkzeugs. Sie betrifft ferner ein Verfahren zum Überwachen einer solchen Bewegung sowie eine Verwendung eines solchen Überwachungssystems bzw. Überwachungsverfahrens.

Ein großes Problem bei der Herstellung von Produkten ist, die Sicherheit des Herstellungsprozesses und die Sicherheit der Qualität der erzeugten Waren zu gewährleisten.

So werden in zunehmendem Maße manuell auszuführende Arbeiten von ungelernten Personen ausgeführt. Während gelernte Arbeitskräfte, aufgrund deren langjährigen Erfahrung, mit dem Prozess bzw. dem Produkt in hohem Maße vertraut sind und somit Fehler während des Prozesses weitgehend eliminiert sind, ist die Fehlerrate bei Arbeiten durch ungelernte Arbeitskräfte erheblich. Andererseits wird in zunehmendem Maße die Dokumentation der Arbeitsvorgänge gefordert, um, beispielsweise unter Haftungsaspekten, später jeden einzelnen Produktionsschritt nachvollziehen zu können.

Aus der Praxis ist es bekannt, Mittel vorzusehen, die der Erfassung einer Position eines Werkzeuges dienen. Ein pneumatisches Schraubwerkzeug ist beispielsweise in einen Ständer eingesetzt. Wird das Schraubwerkzeug von Hand ergriffen und aus dem Ständer herausgenommen, erfasst diese Bewegung berührungslos ein Transponder, durch den diese Information an eine Auswerteinrichtung weitergeleitet wird. - Eine solche Einrichtung ist aber nur geeignet, eine bestimmte Position des Werkzeugs festzustellen.

Aufgabe der vorliegenden Erfindung ist es, ein Überwachungssystem, ein Überwachungsverfahren und eine Verwendung des Systems bzw. des Verfahrens anzugeben, mit dem die Bewegung einer menschlichen Hand oder eines manuell geführten Bauteils, insbesondere eines Werkzeugs, einfach und sicher überwacht werden kann.

Die Erfindung schlägt zunächst ein System zum Überwachen der Bewegung einer menschlichen Hand oder eines manuell geführten Bauteils, insbesondere eines Werkzeugs, mit folgenden Merkmalen vor:
- einem an der Hand oder dem Bauteil angebrachten Sensor,
- einer Einrichtung, mittels der die Ist-Bewegung des Sensors im Raum berührungslos verfolgt und erfasst werden kann,
- einer Einrichtung zum Vergleichen der erfassten Ist-Bewegung des Sensors mit einer gespeicherten Soll-Bewegung des Sensors,
- Mitteln zur Ausgabe einer Fehlermeldung bei einer Abweichung der Ist-Bewegung des Sensors von der gespeicherten Soll-Bewegung.

Bei dem erfindungsgemäßen Überwachungssystem ist somit vorgesehen, die Bewegung der menschlichen Hand beim Vollführen des jeweiligen Prozessvorganges zu erfassen. Hierbei wird entweder unmittelbar an der Hand oder dem von der Hand geführten Bauteil, insbesondere dem Werkzeug, ein Sensor angebracht. Dieser Sensor vollführt somit dieselbe Bewegung wie die Hand bzw. das manuell geführte Bauteil. Mittels der Einrichtung wird diese Ist-Bewegung des Sensors im Raum verfolgt und erfasst. Dies erfolgt berührungslos. Ist mittels des manuell geführten Bauteils, beispielsweise eines pneumatischen Schraubwerkzeugs, ein Schraubvorgang zu vollziehen, bei dem in einer Bewegungsrichtung des Schraubers fünf hintereinander liegende Schrauben 1, 2, 3, 4 und 5 in der Reihenfolge Schraube 1, Schraube 3, Schraube 5, Schraube 2, Schraube 4 verschraubt werden sollen, erfasst die Einrichtung die entsprechende Ist-Bewegung des Sensors. Zuvor ist die Soll-Bewegung des Sensors, somit die Bewegung des Schraubers, mit der Schraubreihenfolge Schraube 1, 3, 5, 2, 4 mittels eines geeigneten Mittels gespeichert worden. Die erfasste Ist-Bewegung des Sensors wird mit der gespeicherten Soll-Bewegung des Sensors verglichen. Entspricht die erfasste Ist-Bewegung des Sensors nicht der vorgegebenen, gespeicherten, und für den exakten Bewegungsablauf erforderlichen Soll-Bewegung des Sensors, indem das Werkzeug nun die Schrauben in der Reihenfolge Schraube 1, 5, 3, 2, 4 verschraubt, wird eine Fehlermeldung ausgegeben.

Erfolgt keine Fehlermeldung und wird dies dokumentiert, ist dies eine Gewähr dafür, dass der Prozess, wie gewünscht, abgelaufen ist. Dies kann einerseits für Dokumentationszwecke verwendet werden. Andererseits wird die ungelernte Arbeitskraft unmittelbar auf ihren Fehler hingewiesen und kann den Vorgang, nunmehr richtig, ausführen. Stimmt deren Ist-Bewegung wieder nicht mit der gespeicherten Sollbewegung überein, ergeht eine erneute Fehlermeldung. Diese kann zu einer übergeordneten Stelle, die für die Prozessüberwachung zuständig ist, weitergeleitet werden, so dass Verantwortliche unmittelbar durch Nachschulung der Person die Prozesssicherheit erheblich erhöhen können.

Die Überwachung, die berührungslos erfolgt, hat den großen Vorteil, dass sie den Arbeitenden bei der Arbeit nicht behindert. Es sind somit, wie es aus der Praxis hinlänglich bekannt ist, keine kabelgeführten Systeme oder Arbeiten in sogenannten Parallelegramm-Ständern erforderlich. Es erfolgt keine Einschränkung der Ergonomie des Arbeitenden.

Die Erfindung zeichnet sich somit durch eine Aktorik, die sich auf die Bewegungen der menschlichen Hand oder des manuell geführten Bauteils bezieht, sowie durch eine Sensorik, die diese Bewegungen überwacht, aus.

Die Bewegung des Sensors im Raum kann auf unterschiedliche Art und Weise verfolgt werden. Es wird als besonders vorteilhaft angesehen, wenn ein dreidimensional wirksamer Digitizer Verwendung wird, der die Bewegung des Sensors im Raum frei verfolgt.

Im Zusammenhang mit dem erforderlichen Grad an Prozesssicherheit und Qualitätssicherung ist zu beachten, dass Bewegungen der menschlichen Hand oder des manuell geführten Bauteils, die innerhalb eines bestimmten Toleranzbereiches erfolgen, als für den Prozess präzise Bewegungen einzustufen sind, somit bei Abgleich mit der Soll-Bewegung des Sensors zu keiner Fehlermeldung führen. Unter diesem Aspekt ist vorgesehen, dass die gespeicherte Soll-Bewegung des Sensors innerhalb einer Hüllkurve erfolgt.

Unter eine Hüllkurve wird ein Toleranzband verstanden, das unterschiedliche, mögliche Bewegungen als nicht fehlerhaft einstuft. Eine solche Hüllkurve kann beispielsweise erzeugt werden, indem, bezogen auf das Beispiel mit den fünf Schrauben, der Arbeitende diverse exakte Schraubabfolgen, somit exakte Schraubabfolgen: Schraube 1, Schraube 3, Schraube 5, Schraube 2, Schraube 4 abarbeitet, jeweils mit geringfügig unterschiedlichen Soll-Bewegungen des Sensors. Diese Soll-Bewegungen des Sensors, die sich als Bewegungslinien darstellen, werden bezüglich ihrer maximalen Abweichungen von einer Idealbewegungslinie erfasst und der Abweichungsbereich zu beiden Seiten von der Ideallinie als Hüllkurve eingespeichert. Jede folgende Bewegung des Sensors entlang einer Linie, die innerhalb der Hüllkurve liegt, wird als nicht fehlerhafte Ist-Bewegung gewertet.

Demzufolge wird die Soll-Bewegung durch mindestens einmalige Ausführung der Bewegung des Sensors im Raum vorgegeben. Bei Vorgabe einer mehrmaligen Bewegung werden die Abweichungen der Bewegungen als Hüllkurve gespeichert. Mittels der Einrichtung zum Vergleichen sind mehrere gespeicherte Folge-Soll-Bewegungen und Folgen von Ist-Bewegungen des Sensors vergleichbar. Insofern wird auf das Beispiel der fünf in der Folge zu verschraubenden Schrauben Bezug genommen.

Das erfindungsgemäße Verfahren zum Überwachen der Bewegung einer menschlichen Hand oder eines manuell geführten Bauteils, insbesondere eines Werkzeugs, zeichnet sich durch folgende Merkmale aus:
- Bewegen der Hand oder des Bauteils mit an der Hand oder dem Bauteil angebrachtem Sensor im Raum,
- berührungsloses Verfolgen und berührungsloses Erfassen der Ist-Bewegung des Sensors im Raum,
- Vergleichen der erfassten Ist-Bewegung des Sensors mit einer vorgegebenen Soll-Bewegung des Sensors,
- Ausgeben einer Fehlermeldung bei einer Abweichung der Ist-Bewegung des Sensors von der vorgegebenen Soll-Bewegung des Sensors.

Das erfindungsgemäße Überwachungssystem bzw. das erfindungsgemäße Überwachungsverfahren ist universell verwendbar. Es kann beispielsweise verwendet werden für die richtige Benutzung von Werkzeugen. Muss beispielsweise ein pneumatischer Schrauber um eine bestimmte Strecke bewegt werden, um sicherzustellen, dass eine Schraube vollständig eingeschraubt ist, kann durch Erfassen der Bewegung des am Werkzeug angebrachten Sensors festgestellt werden, ob dieses Werkzeug um die erforderliche Strecke bewegt worden ist. Es kann ferner erfasst werden, ob in einer Produktionsabfolge das richtige Werkzeug benutzt worden ist, ferner, ob dieses Werkzeug auch in der richtigen Reihenfolge benutzt worden ist. Eine solche Überwachung kann beispielsweise bei Personen, die im Akkord arbeiten, angebracht sein. So wird im Akkordbetrieb durchaus ein Werkzeug von einer Person deshalb nicht benutzt, weil sie glaubt, ohne dieses Werkzeug schneller arbeiten zu können. Die Verwendung des Überwachungssystems bzw. des Verfahrens kann sich ferner auf das Fügen von Bauteilen in bestimmter Reihenfolge beziehen. Es betrifft ferner das Ablegen von Bauteilen in einer bestimmten Reihenfolge.

## Patentansprüche

1. System zum Überwachen der Bewegung einer menschlichen Hand oder eines manuell geführten Bauteils, insbesondere eines Werkzeuges, mit folgenden Merkmalen:
- einem, an der Hand oder dem Bauteil angebrachten Sensor,
- einer Einrichtung, mittels der die Ist-Bewegung des Sensors im Raum berührungslos verfolgt und erfasst werden kann,
- einer Einrichtung zum Vergleichen der erfassten Ist-Bewegung des Sensors mit einer gespeicherten Soll-Bewegung des Sensors,
- Mitteln zur Ausgabe einer Fehlermeldung bei einer Abweichung der Ist-Bewegung des Sensors von der gespeicherten Soll-Bewegung des Sensors.

2. System nach Anspruch 1, wobei ein dreidimensional wirksamer Digitizer die Bewegung des Sensors im Raum frei verfolgt.

3. System nach Anspruch 1 oder 2, wobei die gespeicherte Soll-Bewegung des Sensors innerhalb einer Hüllkurve erfolgt.

4. System nach einem der Ansprüche 1 bis 3, wobei die Soll-Bewegung durch mindestens einmalige Ausführung der Bewegung des Sensors im Raum vorgegeben wird.

5. System nach einem der Ansprüche 1 bis 4, wobei mittels der Einrichtung zum Vergleichen mehrere gespeicherte Folge-Soll-Bewegungen und Folge-Ist-Bewegungen des Sensors vergleichbar sind.

6. Verfahren zum Überwachen der Bewegung einer menschlichen Hand oder eines manuell geführten Bauteils, insbesondere eines Werkzeugs, mit folgenden Merkmalen:
- Bewegen der Hand oder des Bauteils mit an der Hand oder dem Bauteil angebrachten Sensor im Raum,
- berührungsloses Verfolgen und berührungsloses Erfassen der Ist-Bewegung des Sensors im Raum,
- Vergleichen der erfassten Ist-Bewegung des Sensors mit einer vorgegebenen Soll-Bewegung des Sensors,
- Ausgeben einer Fehlermeldung bei einer Abweichung der Ist-Bewegung des Sensors von der vorgegebenen Soll-Bewegung des Sensors.

7. Verfahren nach Anspruch 6, wobei mehrere aufeinanderfolgende Ist-Bewegungen des Sensors mit aufeinanderfolgenden Soll-Bewegungen des Sensors verglichen werden.

8. Verwendung des Überwachungssystems nach einem der Ansprüche 1 bis 5 zum
- Fügen von Teilen in bestimmter Reihenfolge oder
- Ablegen von Teilen in bestimmter Reihenfolge oder
- positionsgenauer Benutzung eines Werkzeuges oder
- Benutzung eines richtigen Werkzeuges.

## Claims

1. System for monitoring the motion of a human hand or a manually handled part, particularly a tool, with the following characteristics:
- a sensor applied to the hand or part,
- a device, by means of which the actual movement of the sensor in space can be detected and recorded without contact,
- a device for comparing the actual movement of the sensor recorded with a stored theoretical movement of the sensor,
- means for issuing an error message if the actual movement of the sensor deviates from the stored theoretical movement of the sensor.

2. System according to claim 1, in which a three dimensionally effective digitiser follows the movement of the sensor freely in space.

3. System according to claim 1 or 2, in which the stored theoretical movement of the sensor is inside an envelope curve.

4. System according to claims 1 to 3, in which the theoretical movement is preset by carrying out the movement of the sensor in space at least once.

5. System according to one of claims 1 to 4, in which several stored sequential theoretical movements and sequential actual movements of the sensor can be compared by means of the device for comparison.

6. Method for monitoring the motion of a human hand or a manually handled part, particularly a tool, with the following characteristics:
- moving the hand or the part in space with a sensor applied to the hand or the part,
- contactless detecting and recording of the actual movement of the sensor in space,
- comparing the actual movement of the sensor recorded with a preset theoretical movement of the sensor,
- issuing an error message if the actual movement of the sensor deviates from the preset theoretical movement of the sensor.

7. Method according to claim 6, in which several successive actual movements of the sensor are compared with successive theoretical movements of the senor.

8. Use of the monitoring system according to one of claims 1 to 5 for
- placing parts in a certain sequence or
- removing parts in a certain sequence or
- using a tool accurately or
- using a correct tool.

## Revendications

1. Système pour surveiller le mouvement d'une main humaine ou d'un élément guidé à la main, en particulier d'un outil, possédant les caractéristiques suivantes :
- un capteur appliqué sur la main ou sur l'élément ;
- un dispositif, au moyen duquel on peut suivre et enregistrer sans contact le mouvement réel du capteur dans l'espace ;
- un dispositif pour la comparaison du mouvement réel du capteur enregistré à un mouvement de consigne du capteur mémorisé ;
- des moyens pour l'émission d'un message d'erreur lors d'une déviation du mouvement réel du capteur par rapport au mouvement de consigne du capteur mémorisé.

2. Système selon la revendication 1, dans lequel un numériseur actif dans les trois dimensions suit librement le mouvement du capteur dans l'espace.

3. Système selon la revendication 1 ou 2, dans lequel le mouvement de consigne du capteur mémorisé a lieu au sein d'une courbe enveloppe.

4. Système selon l'une quelconque des revendications 1 à 3, dans lequel le mouvement de consigne est prédéfini par l'exécution au moins une fois du mouvement du capteur dans l'espace.

5. Système selon l'une quelconque des revendications 1 à 4, dans lequel, au moyen du dispositif de comparaison, on peut comparer plusieurs mouvements de consigne successifs mémorisés et plusieurs mouvements réels successifs du capteur.

6. Procédé pour la surveillance du mouvement d'une main humaine ou d'un élément guidé à la main, en particulier d'un outil, possédant les caractéristiques suivantes :
- le mouvement de la main ou de l'élément dans l'espace, alors qu'un capteur est appliqué sur la main ou sur l'élément ;
- la poursuite sans contact et l'enregistrement sans contact du mouvement réel du capteur dans l'espace ;
- la comparaison du mouvement réel du capteur enregistré à un mouvement de consigne du capteur prédéfini ;
- l'émission d'un message d'erreur lors d'une déviation du mouvement réel du capteur par rapport au mouvement de consigne du capteur prédéfini.

7. Procédé selon la revendication 6, dans lequel on peut comparer plusieurs mouvements réels successifs du capteur à des mouvements de consigne successifs du capteur.

8. Utilisation du système de surveillance selon l'une quelconque des revendications 1 à 5 pour
- l'assemblage de pièces dans une succession déterminée ou
- le dépôt de pièces dans une succession déterminée ou
- l'utilisation, précise quant à la position, d'un outil ou
- l'utilisation d'un outil correct.
